# EUROPEAN PATENT SPECIFICATION

(11) **EP 0 805 263 B1**
(45) Date of publication and mention of the grant of the patent: **25.06.2003**
(21) Application number: 96938510.3
(22) Date of filing: 20.11.1996
(51) Int. Cl.: F01D 5/18, F02C 7/18

(54) **VANE FOR GAS TURBINE**
GASTURBINENSCHAUFEL
AUBE POUR TURBINE A GAZ

(30) Priority: 21.11.1995 JP 30278895
(43) Date of publication of application: 05.11.1997
(73) Proprietor: MITSUBISHI JUKOGYO KABUSHIKI KAISHA, Tokyo 100 (JP)
(72) Inventor: AOYAMA, Kuniaki c/o Mitsubishi Jukogyo K. K., Arai-cho Takasago-shi, Hyogo-ken (JP); TERAZAKI, Masao c/o Mitsubishi Jukogyo K. K., Arai-cho Takasago-shi, Hyogo-ken (JP)
(74) Representative: Garkisch, Marcus
(86) International application number: PCT/JP96/03397
(87) International publication number: WO 97/019257

(56) References cited:
- GB-A- 1 426 049
- GB-A- 2 087 980
- JP-A- 49 093 712
- JP-A- 51 077 710
- JP-A- 60 032 903
- US-A- 4 808 785

## Description

### BACKGROUND OF THE INVENTION:

### Field of the Invention:

The present invention relates to a gas turbine blade as defined by the features of the preamble portion of claim 1 or claim 2 and having a shower head cooling mechanism.

### Description of the Prior Art:

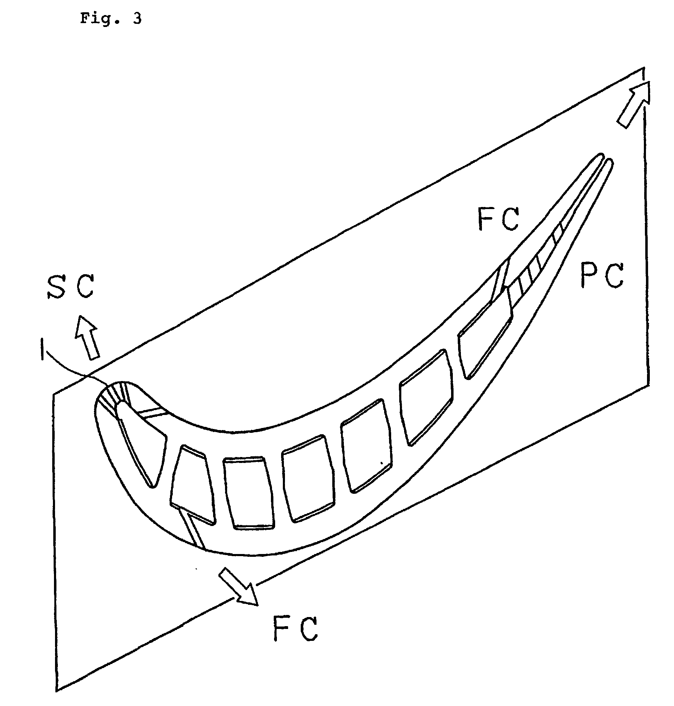

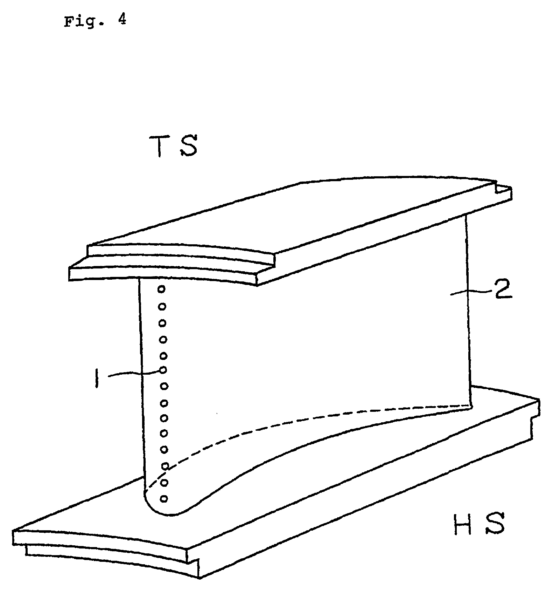

In an air cooled blade of a high temperature gas turbine, film cooling has now become established as an indispensable art. With reference to Figs. 3 and 4, description is made on this kind of conventional cooling art. Fig. 3 is a cross sectional view of an air cooled blade and Fig. 4 is a perspective view showing arrangement of shower head cooling holes.

Generally in a high temperature gas turbine blade, as shown in Fig. 3, there are provided shower head cooling holes SC in a blade leading edge portion, film cooling holes FC on an upstream side of a blade dorsal portion and on a downstream side of a blade ventral portion and pin fin holes PC at a blade trailing edge portion.

Out of these cooling holes, the shower head cooling holes SC, as shown in Fig. 4, are bored in a leading edge portion of a blade 2 so as to be arranged on a straight line toward a blade hub side HS from a blade tip side TS, and air is blown therefrom opposingly to direction of gas flow.

Shower cooling and film cooling relate to an art that enhances a cooling efficiency by covering a blade surface with a cooling air that is blown on a gas flow surface.

If the cooling air is blown too strongly, however, the cooling air causes a peeling from the blade surface so as to mix with a main flow gas with a result not to exert a fuel effect of the film cooling, or if the cooling air is blown weakly, it cannot also exert a proper cooling effect due to shortage of the cooling air amount. Accordingly, consideration must be taken into so that the blade surface may be covered by a film of air optimally.

As mentioned above, if the shower head cooling holes SC are provided opposingly to the direction of gas flow, there occurs a difference in a pressure distribution of gas between the blade tip side TS and the blade hub side HS according to a direction of swirling flow in a combustor.

On the. other hand, as a pressure of the film cooling air is supplied at a constant level, there occurs a place where only a small differential pressure can be obtained: that is, a mid place of the tip portion and the hub portion. For this reason, there is a problem that flow velocity of the cooling air that is blown from the cooling holes is lowered, thereby cooling effect is damaged.

A prior art gas turbine blade with the features of the preamble portion of claim 1 or claim 2 is disclosed in GB 2 087 980 A. The film cooling holes in this blade are arranged on an inclined line but these holes are only provided on the blade ventral side of the forward half section of the blade.

It is therefore an object of the present invention to provide a gas turbine blade which solves said problems and attains a uniform cooling, maintaining a constant pressure irrespective of place of the cooling holes.

In order to attain said object, the present invention provides a gas turbine blade as defined in claim 1 or in claim 2. In this gas turbine blade a plurality of shower head cooling holes bored in a blade leading edge portion are arranged on one line so as to be biased either to a left hand side or to a right hand side, seen from upstream, toward a blade hub side from a blade tip side according to direction of swirling flow in a combustor. Thus, taking account of the direction of swirling flow in the combustor disposed upstream, the shower head cooling holes are arranged on a line that is biased to the left hand side or to the right hand side, seen from upstream, toward the blade hub side from the blade tip side, thereby the gas pressure at each place of the cooling holes becomes constant in a blade height direction and the differential pressure from the cooling air pressure also becomes constant, and a uniform cooling becomes attainable.

Also, the present invention provides a gas turbine blade wherein said plurality of shower head cooling holes are arranged on one line so that the shower head cooling holes of the blade tip side are biased to the left hand side, seen from upstream, of those of the blade hub side if the direction of swirling flow in the combustor is clockwise. Thus, if the direction of swirling flow in said combustor disposed upstream is clockwise, the shower head cooling holes are arranged on a line so that the shower head cooling holes of the blade tip side are biased to the left hand side, seen from upstream, of those of the blade hub side, thereby the gas pressure at each place of the cooling holes becomes constant in the blade height direction and the differential pressure from the cooling air pressure also becomes constant, and a uniform cooling becomes attainable.

Also, the present invention provides a gas turbine blade wherein said plurality of shower head cooling holes are arranged on one line so that the shower head cooling holes of the blade tip side are biased to the right hand side, seen from upstream, of those of the blade hub side if the direction of swirling flow in the combustor is counter-clockwise. Thus, if the direction of swirling flow in said combustor disposed upstream is counter-clockwise, the shower head cooling holes are arranged on a line so that the shower head cooling holes of the blade tip side are biased to the right hand side, seen from upstream, of those of the blade hub side, thereby the gas pressure at each place of the cooling holes becomes constant in the blade height direction and the differential pressure from the cooling air pressure also becomes constant, and a uniform cooling becomes attainable.

Also, the present invention provides a gas turbine blade wherein cooling air is blown from said plurality of shower head cooling holes so as to cool a blade surface. Thus, air is employed as a cooling medium blown from the shower head cooling holes for cooling the blade surface, thereby a desired cooling can be attained securely and exactly.

### BRIEF DESCRIPTION OF THE DRAWINGS:

In the accompanied drawings:
Fig. 1 is a perspective view showing shower head cooling holes of one embodiment according to the present invention.
Fig. 2 is an explanatory view showing pressure state at three positions of the shower head cooling holes of Fig. 1 in comparison with prior art shower head cooling holes.
Fig. 3 is a cross sectional view showing air cooling structure of a prior art gas turbine blade.
Fig. 4 is a perspective view showing shower head cooling holes of a prior art gas turbine blade.

### DESCRIPTION OF THE PREFERRED EMBODIMENTS:

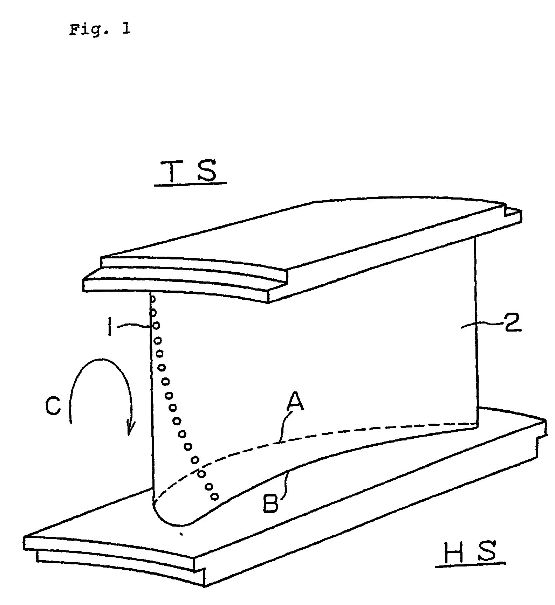

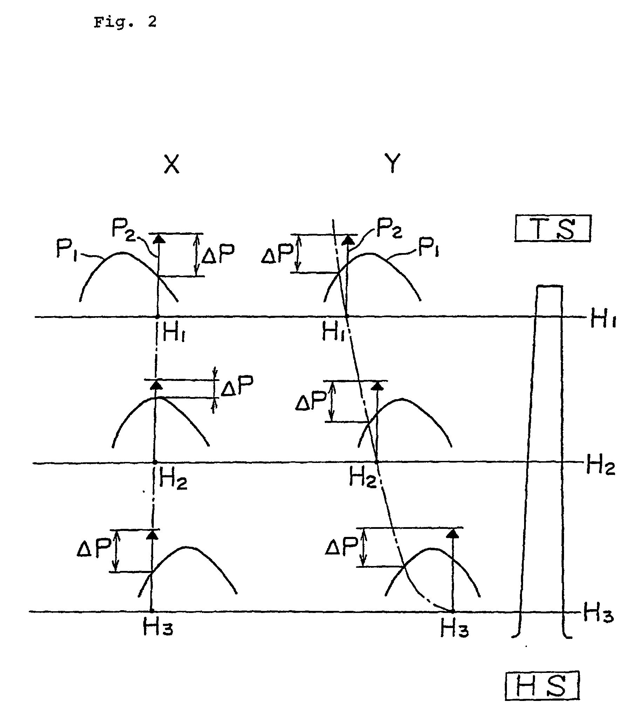

Herebelow, description is made of one preferred embodiment according to the present invention with reference to Figs. 1 and 2. Fig. 1 is a perspective view of an air cooled blade of a gas turbine and Fig. 2.is an explanatory view showing pressure state at three positions of cooling holes of the present embodiment in comparison with prior art cooling holes.

Numeral 1 designates a shower head cooling hole, which is bored in a plural number in a leading edge portion of a blade 2 so as to be arrayed in a line from a blade tip side TS to a blade hub side HS. Said shower head cooling holes 1 are arrayed with deviation of position between each hole so as to correspond to a direction of swirling flow in a combustor as shown by arrow C in Fig. 1.

That is, if the direction of swirling flow is clockwise, as shown by said arrow C, the shower head cooling holes 1 of the blade tip side TS are biased to a left hand side (blade dorsal side in this embodiment) A, seen from an upstream side of the blade, and approaching the blade hub side HS, the shower head cooling holes 1 are biased to a right hand side (blade ventral side in this embodiment) B, seen from the upstream side of the blade. It is to be noted that, although not specifically shown in the figure, if the direction of swirling flow in the combustor is counter-clockwise, the shower head cooling holes 1 are bored so as to be biased reversely thereto.

In the present embodiment, the shower head cooling holes 1 are biased so as to correspond to the direction of swirling flow, as mentioned above. In Fig. 2, state of air flow and pressure change of said case is shown in comparison with the prior art blade in which the cooling holes are arrayed on a straight line.

That is, as shown at position X on the left hand side of Fig. 2, in the case of the prior art blade in which the cooling holes are bored on a straight line from the blade tip side TS toward the blade hub side HS, pressure P₂ of the cooling air is constant at respective position on the straight line while there are changes of pressure distribution P₁ of the gas flow. Accordingly, there occur differences in a differential pressure ΔP thereof at different positions H₁, H₂ and H₃ in a height direction of the blade 2. Thus, there are generated different natures of flow, which results in less uniform cooling effect, especially at the blade position H₂, the cooling effect is damaged due to lowering of the flow velocity of the cooling air.

On the other hand, in the present embodiment, the shower head cooling holes 1 are bored with deviation of position between each hole, taking account of the direction of swirling flow, so as to correspond to the pressure distribution of gas, thereby as shown at position Y at the center of Fig. 2, a constant differential pressure ΔP relative to the cooling air pressure P₂ is obtained at each blade height position of H₁, H₂ and H₃. Thus, the nature of flow being constant at any position, uniform cooling can be done and cooling efficiency can be enhanced further.

In the above, the present invention is described by use of the embodiment as illustrated in the figures, but needless to mention, the present invention is not limited thereto but can be added with various modifications to its definite structure within the scope of the claims as hereafter appended.

### INDUSTRIAL APPLICABILITY:

According to the present invention as described above, in a high temperature gas turbine blade, when film cooling is to be done by cooling air blown from shower head cooling holes, a constant pressure is obtained at each position of cooling holes from blade tip side to blade hub side and nature of flow of fluid at each said position becomes uniform, so that a uniform film cooling can be done. Thereby, a high film cooling efficiency can be obtained and reliability of the blade can be enhanced further.

## Claims

1. A gas turbine blade comprising:
a blade section having a blade tip side (TS), a blade hub side (HS), a blade dorsal side (A), a blade ventral side (B) and a blade leading edge portion; and
a plurality of shower head cooling holes (1) formed in said blade leading edge portion;
**characterized in that** said shower head cooling holes (1) are arranged along a line which runs from said blade dorsal side (A) at said blade tip side (TS) of said blade section to said blade ventral side (B) at said blade hub side (HS) of said blade section.

2. A gas turbine blade comprising:
a blade section having a blade tip side (TS), a blade hub side (HS), a blade dorsal side (A), a blade ventral side (B) and a blade leading edge portion; and
a plurality of shower head cooling holes (1) formed in said blade leading edge portion;
**characterized in that** said shower head cooling holes (1) are arranged along a line which runs from said blade ventral side (B) at said blade tip side (TS) of said blade section to said blade dorsal side (A) at said blade hub side (HS) of said blade section

3. The gas turbine blade as claimed in claim 1, wherein said cooling holes (1) are arranged for use with a combustor in which a direction of swirling flow is clockwise as viewed from upstream of said gas turbine blade.

4. The gas turbine blade as claimed in claim 2, wherein said cooling holes (1) are arranged for use with a combustor in which a direction of swirling flow is counter-clockwise as viewed from upstream of said gas turbine blade.

5. The gas turbine blade as claimed in anyone of claims 1 to 4, wherein said shower head cooling holes (1) are adapted to permit cooling air to be blown theretrhough in order to cool a surface of said blade section.

6. The gas turbine blade as claimed in anyone of claims 1 to 5, wherein said shower head cooling holes (1) are consecutively arranged along a height of said blade section from said blade tip side (TS) to said blade hub side (HS) and are displaced from each other in a direction from said blade dorsal side (A) to said blade ventral side (B) or vice versa such that there is achieved a substantially constant differential pressure (ΔP) between cooling air pressure (P₂) through said shower head cooling holes (1) and gas flow pressure (P₁) at said blade section at respective height positions of said blade section between said blade tip side (TS) and said blade hub side (HS).

## Patentansprüche

1. Gasturbinenschaufel mit:
einer Schaufelsektion mit einer Schaufelspitzenseite (TS), einer Schaufelnabenseite (HS), einer dorsalen Schaufelseite (A), einer ventralen Schaufelseite (B) und einem Schaufel-Vorderkantenabschnitt, und
mehreren in dem Schaufel-Vorderkantenabschnitt ausgebildeten Sprühkopf-Kühlungslöchern (1),
**dadurch gekennzeichnet, daß** die Sprühkopf-Kühlungslöcher (1) entlang einer Linie angeordnet sind, die von der dorsalen Schaufelseite (A) an der Schaufelspitzenseite (TS) der Schaufelsektion zu der ventralen Schaufelseite (B) an der Schaufelnabenseite (HS) der Schaufelsektion verläuft.

2. Gasturbinenschaufel mit:
einer Schaufelsektion mit einer Schaufelspitzenseite (TS), einer Schaufelnabenseite (HS), einer dorsalen Schaufelseite (A), einer ventralen Schaufelseite (B), und einem Schaufel-Vorderkantenabschnitt, und
mehreren in dem Schaufel-Vorderkantenabschnitt ausgebildeten Sprühkopf-Kühlungslöchern (1),
**dadurch gekennzeichnet, daß** die Sprühkopf-Kühlungslöcher (1) entlang einer Linie angeordnet sind, die von der ventralen Schaufelseite (B) an der Schaufelspitzenseite (TS) der Schaufelsektion zu der dorsalen Schaufelseite (A) an der Schaufelnabenseite (HS) der Schaufelsektion verläuft.

3. Gasturbinenschaufel nach Anspruch 1, wobei die Kühlungslöcher (1) zur Verwendung mit einem Combustor angeordnet sind, in dem eine Richtung einer Wirbelströmung, von stromaufwärts der Gasturbinenschaufel betrachtet, im Uhrzeigersinn ist.

4. Gasturbinenschaufel nach Anspruch 2, wobei die Kühlungslöcher (1) zur Verwendung mit einem Combustor angeordnet sind, in dem eine Richtung einer Wirbelströmung im Gegenuhrzeigersinn, von stromaufwärts der Gasturbinenschaufel betrachtet, ist.

5. Gasturbinenschaufel nach einem der Ansprüche 1 bis 4, wobei die Sprühkopf-Kühlungslöcher (1) so ausgelegt sind, daß sie ein Durchblasen von Kühlungsluft durch sie gestatten, um eine Oberfläche des Schaufelabschnitts zu kühlen.

6. Gasturbinenschaufel nach einem der Ansprüche 1 bis 5, wobei die Sprühkopf-Kühlungslöcher (1) aufeinanderfolgend entlang einer Höhe der Schaufelsektion von der Schaufelspitzenseite (TS) zu der Schaufelnabenseite (HS) angeordnet und voneinander in einer Richtung von der dorsalen Schaufelseite (A) zu der ventralen Schaufelseite (B) oder umgekehrt versetzt sind, so daß ein im wesentlichen konstantes Druckgefälle (ΔP) zwischen dem Kühlluftdruck (P₂) durch die Sprühkopf-Kühlungslöcher (1) und einem Gasströmungsdruck (P₁) an der Schaufelsektion an betreffenden Höhenpositionen der Schaufelsektion zwischen der Schaufelspitzenseite (TS) und der Schaufelnabenseite (HS) erzielt wird.

## Revendications

1. Aube de turbine à gaz comprenant :
une section d'aube ayant un côté d'extrémité d'aube (TS), un côté de pied d'aube (HS), un côté dorsal d'aube (A), un côté ventral d'aube (B) et une partie de bord d'attaque d'aube ; et
une pluralité de trous de refroidissement (1) en pomme d'arrosoir formés dans la partie de bord d'attaque d'aube ;
**caractérisée en ce que** les trous de refroidissement (1) en pomme d'arrosoir sont disposés le long d'une ligne qui va du côté dorsal d'aube (A) au niveau du côté d'extrémité d'aube (TS) de la section d'aube jusqu'au côté ventral d'aube (B) au niveau du côté de pied d'aube (HS) de la section d'aube.

2. Aube de turbine à gaz comprenant :
une section d'aube ayant un côté d'extrémité d'aube (TS), un côté de pied d'aube (HS), un côté dorsal d'aube (A), un côté ventral d'aube (B) et une partie de bord d'attaque d'aube ; et
une pluralité de trous de refroidissement (1) en pomme d'arrosoir formés dans la partie de bord d'attaque d'aube ;
**caractérisée en ce que** les trous de refroidissement (1) en pomme d'arrosoir sont disposés le long d'une ligne qui va du côté ventral d'aube (B) au niveau du côté d'extrémité d'aube (TS) de la section d'aube jusqu'au côté dorsal d'aube (A) au niveau du côté de pied d'aube (HS) de la section d'aube.

3. Aube de turbine à gaz selon la revendication 1, dans laquelle les trous de refroidissement (1) sont disposés de façon à être utilisés avec un brûleur dans lequel une direction d'un écoulement turbulent est en sens horaire vue depuis le côté amont de l'aube de turbine à gaz.

4. Aube de turbine à gaz selon la revendication 2, dans laquelle les trous de refroidissement (1) sont disposés de façon à être utilisés avec un brûleur dans lequel une direction d'un écoulement turbulent est en sens inverse du sens horaire vue depuis le côté amont de l'aube de turbine à gaz

5. Aube de turbine à gaz selon l'une quelconque des revendications 1 à 4, dans laquelle les trous de refroidissement (1) en pomme d'arrosoir sont adaptés pour permettre le soufflage d'un air de refroidissement par ces trous afin de refroidir une surface de la section d'aube.

6. Aube de turbine à gaz selon l'une quelconque des revendications 1 à 5, dans laquelle les trous de refroidissement (1) en pomme d'arrosoir sont successivement disposés sur une hauteur de la section d'aube depuis le côté d'extrémité d'aube (TS) vers le côté de pied d'aube (HS) et sont décalés les uns par rapport aux autres dans un sens allant du côté dorsal d'aube (A) jusqu'au côté ventral d'aube (B) ou inversement afin d'obtenir une différence de pression (ΔP) sensiblement constante entre la pression de l'air de refroidissement (P₂) dans les trous de refroidissement (1) en pomme d'arrosoir et la pression d'écoulement du gaz (P₁) au niveau de la section d'aube à des hauteurs respectives de la section d'aube entre le côté d'extrémité d'aube (TS) et le côté de pied d'aube (HS).
